# EUROPEAN PATENT APPLICATION

(11) **EP 4 148 562 A1**
(43) Date of publication of application: **15.03.2023**
(21) Application number: 21857516.5
(22) Date of filing: 05.08.2021
(51) Int. Cl.: G06F 9/30, G06F 9/38

(54) **INSTRUCTION TRANSMISSION METHOD AND APPARATUS, ELECTRONIC DEVICE, AND STORAGE MEDIUM**

(30) Priority: 17.08.2020 CN 202010827436
(71) Applicant: Beijing Baidu Netcom Science Technology Co., Ltd., Beijing 100085 (CN)
(72) Inventor: WEN, Junhui, Beijing 100085 (CN); TIAN, Chao, Beijing 100085 (CN); YANG, Bibo, Beijing 100085 (CN)
(74) Representative: advotec.
(86) International application number: PCT/CN2021/110915
(87) International publication number: WO 2022/037421

(57) **Abstract**

The present application relates to the technical fields of processors (digital chips), data processing, and voice processing, and discloses an instruction transmission method and apparatus, an electronic device, and a storage medium. The specific implementation solution is: a decoding unit obtains the transmission states of two transmission channels in a transmission period; the decoding unit, according to a combination of the transmission states of the two transmission channels, generates a transmission control signal for the two transmission channels; and the decoding unit controls the two transmission channels to, according to the transmission control signal, transmit instructions to an execution unit. In the transmission method of the present application, a transmission control signal for two transmission channels can be determined according to a combination of the transmission states of the two transmission channels, the two transmission channels can be controlled to transmit instructions according to the transmission control signal, and out-of-sequence transmission can be achieved. Compared with out-of-sequence transmission architectures using a means of configuring a reservation station in hardware, the described method has the advantages of the hardware structure being simple, the occupied area and power consumption of a processor being small, and the costs of development being low.

## Description

### CROSS-REFERENCE TO RELATED APPLICATIONS

This application is based on and claims priority to Chinese Patent Application No. 202010827436.3, filed on August 17, 2020, the entire contents of which are incorporated herein by reference.

### TECHNICAL FIELD

The disclosure relates to the technical fields of processor, data processing and speech processing in the field of computer technologies, in particular to an instruction transmission method, an instruction transmission apparatus, an electronic device and a storage medium.

### BACKGROUND

At present, the architecture of processor has a great impact on the execution efficiency of the processor. Some processors use the sequential transmission architecture, which have the advantages of simple hardware structure and easy implementation. However, if the previous instruction cannot be transmitted, the later instructions cannot be transmitted either, and thus the execution efficiency of the processor is not high. In some scenarios with high real-time requirements, the processor is required to have high execution efficiency. For example, when processing a speech contains a lot of digital signals, the processor needs to issue instructions and execute the instructions as soon as possible, but the sequential transmission architecture cannot satisfy the requirements. Some processors also use the out-of-sequence transmission architecture to achieve high execution efficiency, but the out-of-sequence transmission architecture in the related art uses a means of configuring a reservation station in hardware, which has high requirements for hardware resources and is not easy to implement.

### SUMMARY

The disclosure provides an instruction transmission method, an instruction transmission apparatus, an electronic device, a storage medium and a computer program product.

According to a first aspect of the disclosure, an instruction transmission method is provided. The method includes: obtaining by an instruction decode unit, transmission states of two transmission channels in a transmission cycle; generating by the instruction decode unit, a transmission control signal for the two transmission channels based on a combination of the transmission states of the two transmission channels; and controlling by the instruction decode unit the two transmission channels to transmit instructions to an execution unit based on the transmission control signal.

According to a second aspect of the disclosure, an instruction transmission apparatus is provided. The apparatus includes an instruction decode unit and an execution unit. The instruction decode unit is connected to the execution unit, and the instruction decode unit includes two transmission channels.

The instruction decode unit is configured to obtain transmission states of two transmission channels in a transmission cycle, generate a transmission control signal for the two transmission channels based on a combination of the transmission states of the two transmission channels, and control the two transmission channels to transmit instructions to an execution unit based on the transmission control signal. The execution unit is configured to execute the received instructions.

According to a third aspect of the disclosure, an electronic device is provided. The electronic device includes: at least one processor and a memory communicatively coupled to the at least one processor. The memory stores instructions executable by the at least one processor, and when the instructions are executed by the at least one processor, the at least one processor is enabled to implement the instruction transmission method according to the first aspect of the disclosure.

According to a fourth aspect of the disclosure, a non-transitory computer-readable storage medium having computer instructions stored thereon is provided. The computer instructions are configured to enable a computer to implement the instruction transmission method according to the first aspect of the disclosure.

According to a fifth aspect of the disclosure, a computer program product including computer programs is provided. When the computer programs are executed by a processor, the instruction transmission method according to the first aspect of the disclosure is implemented.

It should be understood that the content described in this section is not intended to identify key or important features of the embodiments of the disclosure, nor is it intended to limit the scope of the disclosure. Additional features of the disclosure will be easily understood based on the following description.

### BRIEF DESCRIPTION OF THE DRAWINGS

The drawings are used to better understand the solution and do not constitute a limitation to the disclosure, in which:
FIG. 1 is a flowchart of an instruction transmission method according to a first embodiment of the disclosure.
FIG. 2 is a flowchart of an instruction transmission method after generating an instruction fetch signal according to a second embodiment of the disclosure.
FIG. 3 is a flowchart of transmitting instructions to an execution unit based on a transmission control signal in an instruction transmission method according to a third embodiment of the disclosure.
FIG. 4 is a flowchart of transmitting instructions to target instruction execution components in an instruction transmission method according to a fourth embodiment of the disclosure.
FIG. 5 is a flowchart of writing back execution results of instructions in an instruction transmission method according to a fifth embodiment of the disclosure.
FIG. 6 is a flowchart of writing execution results into a general purpose register sequentially based on instruction numbers in an instruction transmission method according to a sixth embodiment of the disclosure.
FIG. 7 is a schematic diagram of a one-to-one correspondence between instruction numbers and storage location numbers in an instruction transmission method according to a seventh embodiment of the disclosure.
FIG. 8 is a schematic diagram of a processor in an instruction transmission method according to an eighth embodiment of the disclosure.
FIG. 9 is a block diagram of an instruction transmission apparatus according to a first embodiment of the disclosure.
FIG. 10 is a block diagram of an instruction transmission apparatus according to a second embodiment of the disclosure.
FIG. 11 is a block diagram of an electronic device used to implement the instruction transmission method according to embodiments of the disclosure.

### DETAILED DESCRIPTION

The following describes the exemplary embodiments of the disclosure with reference to the accompanying drawings, which includes various details of the embodiments of the disclosure to facilitate understanding, which shall be considered merely exemplary. Therefore, those of ordinary skill in the art should recognize that various changes and modifications can be made to the embodiments described herein without departing from the scope and spirit of the disclosure. For clarity and conciseness, descriptions of well-known functions and structures are omitted in the following description.

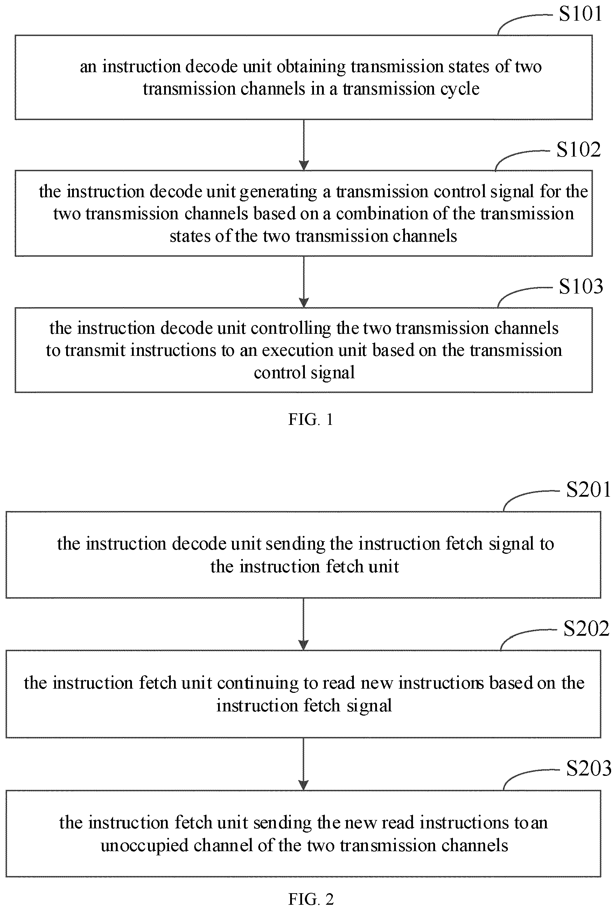

FIG. 1 is a flowchart of an instruction transmission method according to a first embodiment of the disclosure.

As illustrated in FIG. 1, the instruction transmission method according to the first embodiment of the disclosure includes the followings.

At S101, an instruction decode unit obtains transmission states of two transmission channels in a transmission cycle.

It is to be noted that the execution subject of the instruction transmission method of the disclosure may be a hardware device having data information processing capabilities and/or software necessary to drive the hardware device to operate. Optionally, the execution subject may include a workstation, a server, a computer, a user terminal and other network devices. Optionally, the execution body of the instruction transmission method may be a Central Processing Unit (CPU).

In embodiments of the disclosure, the instruction decode unit (IDU) includes two transmission channels, both of which can decode instructions and transmit the decoded instructions.

In embodiments of the disclosure, the transmission cycle may be calibrated as appropriate and pre-set in the storage space of the IDU. Optionally, the IDU can transmit up to one instruction on each transmission channel per transmission cycle, and then the IDU can transmit two instructions at most.

In a specific implementation, the transmission state of the transmission channel may include available for transmission and unavailable for transmission.

At S102, the IDU generates a transmission control signal for the two transmission channels based on a combination of the transmission states of the two transmission channels.

In a specific implementation, the combination of the transmission states may include, but are not limited to three state combinations, i.e., both the two transmission channels are available for transmission, both the two transmission channels are unavailable for transmission, and one of the two transmission channels is available for transmission and the other transmission channel is unavailable for transmission. The transmission control signal includes, but is not limited to, a signal instructing the transmission channel to transmit instructions, and a signal instructing the transmission channel to pause transmitting instructions.

Optionally, a mapping relation or a mapping table between the combination of the transmission states and the transmission control signal may be preset. After the combination of the transmission states is obtained, the transmission control signal may be determined at this time for controlling instruction transmission on the two transmission channels by querying the mapping relation or the mapping table. It should be noted that the above mapping relation or mapping table may be calibrated according to the actual situation and preset in the storage space of the IDU.

At S103, the IDU controls the two transmission channels to transmit instructions to an execution unit based on the transmission control signal.

In embodiments of the disclosure, the execution unit may execute the decoded instructions.

It is understood that the execution unit may include a plurality of instruction execution components, each of which may be used to execute different types of instructions. For example, the execution unit includes, but is not limited to, an additive instruction execution component, and a subtractive instruction execution component.

In a specific implementation, it is assumed that the IDU includes a transmission channel A and a transmission channel B, and the instruction in the transmission channel A is always fetched earlier than the instruction in the transmission channel B within one transmission cycle. If at this time the transmission channel A is not available for transmission and the transmission channel B is available for transmission, the IDU can generate a signal for instructing the transmission channel A to pause transmitting the instructions and instructing the transmission channel B to transmit the instructions, and thus the IDU can control the transmission channel A to pause transmitting the instructions and control the transmission channel B to transmit the instructions. Therefore, at this time, the instruction in the transmission channel B is transmitted earlier than the instruction in the transmission channel A, that is, the method can realize the out-of-sequence transmission and the processor has a higher execution efficiency.

In conclusion, according to the instruction transmission method of embodiments of the disclosure, the transmission control signal for the two transmission channels is determined based on the combination of the transmission states of the two transmission channels, and the two transmission channels are controlled to transmit instructions based on the transmission control signal. In this way, out-of-sequence transmission can be achieved with high execution efficiency. Compared with the related art in which the out-of-sequence transmission architecture using a means of configuring a reservation station in hardware, this method has the advantages of the hardware structure being simple, the occupied area and power consumption of the processor being small, and the costs of development being low.

When the scenario requiring high real-time performance, such as speech processing, is performed by the instruction transmission method of embodiments of the disclosure, since the out-of-sequence transmission can be achieved, the processor has the high execution efficiency, and the processor can issue instructions and perform the calculation as soon as possible, the real-time performance requirements of the scenario such as speech processing can be satisfied.

On the basis of any of the above embodiments, at step S 101, the IDU may obtain the transmission states of the two transmission channels in the transmission cycle as follows. The IDU determines the transmission states of the transmission channels based on states of registers corresponding to the instructions in the transmission channels, states of the instruction execution components corresponding to the instructions, the states of the transmission channels, and whether the instructions in the two transmission channels conflict with each other.

Optionally, if the registers and the instruction execution components corresponding to the instructions in the transmission channels are available, the transmission channels are also available, and there is no conflict between the instructions in the two transmission channels, the transmission channels can be determined to be available for transmission.

In specific implementations, there are instructions that require to fetch operands from registers. If the register is not available, the instruction cannot obtain the operand and the instruction is not available for transmission, and thus it can be determined that the transmission channel on which the instruction is located is not available for transmission.

In specific implementations, there is a possibility that the instruction execution component corresponding to an instruction is executing a previously transmitted instruction, at which point the instruction execution component corresponding to the instruction is not available and the instruction is not available for transmission, and thus the transmission channel on which the instruction is located can be determined to be unavailable for transmission.

In specific implementations, the instructions in the two transmission channels may conflict with each other, for example, the instruction execution components corresponding to the instructions in the two transmission channels may be the same instruction execution component, in which case it may be determined that one of the two transmission channels is available for transmission and the other channel is unavailable. Optionally, if the two transmission channels may include a primary transmission channel and a secondary transmission channel, and the primary transmission channel has a higher transmission priority than the secondary transmission channel, assuming that there is conflict between the instructions in the primary transmission channel and the secondary transmission channel, it may be determined that the primary transmission channel is available for transmission and the secondary transmission channel is unavailable for transmission, to ensure that the primary transmission channel has priority to transmit.

Thus, the method can determine the transmission states of the transmission channels based on the states of the registers corresponding to the instructions in the transmission channels, the states of the instruction execution components corresponding to the instructions, the states of the transmission channels, and whether the instructions in the two transmission channels conflict with each other.

Based on any of the above embodiments, the IDU generating the transmission control signal for the two transmission channels based on the combination of the transmission states of the two transmission channels at step S102, may include three possible modes as follows.

In mode 1, in response to determining that the combination of the transmission states of the two transmission channels represents that the two transmission channels are available for transmission, the IDU generates a first transmission control signal for instructing the two transmission channels to transmit.

In a specific implementation, if both the two transmission channels are available for transmission, the first transmission control signal for instructing the two transmission channels to transmit may be generated to control both the two transmission channels to transmit instructions.

In mode 2, in response to determining that the combination of the transmission states of the two transmission channels represent that the two transmission channels are unavailable for transmission, the IDU generates a second transmission control signal for instructing the two transmission channels to pause transmitting.

In a specific implementation, if both the two transmission channels are unavailable for transmission, the second transmission control signal for instructing the two transmission channels to pause transmitting may be generated to control the two transmission channels to pause transmitting the instructions.

In mode 3, in response to determining that the combination of the transmission states of the two transmission channels represent that one of the two transmission channels is available for transmission and the other transmission channel is unavailable for transmission, the IDU generates a third transmission control signal for instructing the one transmission channel to transmit and the other transmission channel to pause transmitting.

In a specific implementation, assuming that the two transmission channels are transmission channel A and transmission channel B, and the transmission channel A is available for transmission and the transmission channel B is unavailable for transmission, a third transmission control signal for instructing the transmission channel A to transmit and the transmission channel B to pause transmitting can be generated, to control the transmission channel A to transmit instructions and control the transmission channel B to pause transmitting the instructions.

As a result, the method may generate three kinds of transmission control signals for the two transmission channels based on the three kinds of combination of the transmission states of the two transmission channels.

Based on any of the above embodiments, the two transmission channels may include the primary transmission channel and the secondary transmission channel, and the primary transmission channel has a higher transmission priority than the secondary transmission channel.

It is to be noted that, in one transmission cycle, the instruction in the primary transmission channel is always fetched earlier than the instruction in the secondary transmission channel.

Furthermore, the IDU generating the transmission control signal for the two transmission channels based on the combination of the transmission states of the two transmission channels at step S102, may include three possible modes as follows.

In mode 1, if both the primary transmission channel and the secondary transmission channel are available for transmission, the IDU generates a transmission control signal that instructs the primary transmission channel to transmit firstly and the secondary transmission channel to transmit after transmission on the primary transmission channel is completed.

In mode 2, if the primary transmission channel is available for transmission and the secondary transmission channel is unavailable for transmission, the IDU generates a transfer indication signal for transferring instructions to be transmitted in the secondary transmission channel to the primary transmission channel for transmission, and then the IDU transfers the instructions to be transmitted to the primary transmission channel according to the transfer indication signal.

In a specific implementation, if the primary transmission channel is available for transmission and the secondary transmission channel is unavailable for transmission, the primary transmission channel is controlled to transmit instructions firstly, and the secondary transmission channel is controlled to pause transmitting the instructions at the same time, after which the IDU can also generate the transfer indication signal for transferring the instructions to be transmitted on the secondary transmission channel to the primary transmission channel for transmission, so that the instructions to be transmitted on the secondary transmission channel can be transmitted through the primary transmission channel. It should be noted that since each transmission channel transmits at most one instruction within one transmission cycle, the instruction to be transmitted on the secondary transmission channel is transmitted through the primary transmission channel in the next transmission cycle.

Further, after the instruction to be transmitted on the secondary transmission channel is transferred to the primary transmission channel, the primary transmission channel is occupied and the secondary transmission channel is idle, and read new instruction can be sent to the secondary transmission channel.

In mode 3, if the primary transmission channel is unavailable for transmission and the secondary transmission channel is available for transmission, the IDU generates a transmission control signal for instructing the secondary transmission channel to transmit and the primary transmission channel to pause transmitting.

In a specific implementation, if the primary transmission channel is unavailable for transmission and the secondary transmission channel is available for transmission, the secondary transmission channel can be controlled to transmit the instructions and the primary transmission channel can be controlled to pause transmitting the instructions.

Further, after transmitting the instructions to be transmitted on the secondary transmission channel is completed, the secondary transmission channel is idle and the primary transmission channel is occupied, and the new read instruction can be sent to the secondary transmission channel.

As a result, the method can control the transmission on the transmission channels by considering the transmission priorities of the transmission channels and the combination of the transmission states of the transmission channels.

Based on the above embodiments, after the IDU at step S 101 obtains the transmission states of the two transmission channels in the transmission cycle, the IDU may also generate an instruction fetch signal for an Instruction Fetch Unit (IFU) based on the combination of the transmission states of the two transmission channels.

In embodiments of the disclosure, the IFU may read instructions and send the instructions to the IDU. Optionally, the compiled instructions may be stored in the instruction storage space of the processor in advance, and the IFU may read the instructions from the instruction storage space according to the sequence of the instructions. Optionally, the IFU can read up to two new instructions per transmission cycle.

In embodiments of the disclosure, the instruction fetch signal includes, but is not limited to, a signal for instructing the IFU to read two new instructions, a signal for instructing the IFU to read one new instruction, a signal for instructing the IFU to pause reading new instructions.

Optionally, the mapping relation or mapping table between the combination of transmission states and the instruction fetch signal can be established in advance, and after the combination of transmission states is obtained, the instruction fetch signal can be determined by querying the mapping relation or mapping table and used to control the IFU to read instructions. It should be noted that the above mapping relation or mapping table can be calibrated according to the actual situation and pre-set in the storage space of the IDU.

As a result, the method is able to determine the instruction fetch signal for the IFU based on the combination of the transmission states of the two transmission channels.

Based on any of the above embodiments, the IDU may generate the instruction fetch signal for the IFU based on the combination of the transmission states of the two transmission channels, in three possible modes as follows.

In mode 1, in response to determining that the combination of the transmission states represents that both the two transmission channels are available for transmission, the IDU generates a first instruction fetch signal for instructing the instruction fetch unit to read two new instructions.

In a specific implementation, if both transmission channels are available for transmission, which indicates that the instructions on both transmission channels can be transmitted, after which both transmission channels may be idle, the first instruction fetch signal for instructing the IFU to read two new instructions can be generated, to control the IFU to read two new instructions.

In mode 2, in response to determining that the combination of the transmission states represents that the two transmission channels are unavailable for transmission, the IDU generates a second instruction fetch signal for instructing the IFU to pause reading new instructions.

In a specific implementation, if both transmission channels are unavailable for transmission, which indicates that the instructions in both transmission channels may not be transmitted, after which both transmission channels are occupied, the second instruction fetch signal for instructing the IFU to pause reading new instructions may be generated to control the IFU to pause reading new instructions.

In mode 3, in response to determining that the combination of the transmission states of the two transmission channels represents that one of the two transmission channels is available for transmission and the other transmission channel is unavailable for transmission, the IDU generates a third instruction fetch signal for instructing the IFU to read one new instruction.

In a specific implementation, assuming that the two transmission channels are transmission channel A and transmission channel B, and the transmission channel A is available for transmission and the transmission channel B is unavailable for transmission, which indicates that the instructions in the transmission channel A can be transmitted and the instructions in the transmission channel B cannot be transmitted, after which the transmission channel A may be idle and the transmission channel B is occupied, the third instruction fetch signal for instructing the IFU to read one new instruction can be generated to control the IFU to read one new instruction.

As a result, the method can generate three kinds of instruction fetch signals for the IFU based on three kinds of combination of the transmission states of the two transmission channels.

Based on any of the above embodiments, as shown in FIG. 2, after the IDU generates the instruction fetch signal for the IFU based on the combination of the transmission states of the two transmission channels, the method may include the followings.

At S201, the IDU sends the instruction fetch signal to the IFU.

At S202, the IFU continues to read new instructions based on the instruction fetch signal.

At S203, the IFU sends the new read instructions to the unoccupied transmission channel of the two transmission channels.

In embodiments of the disclosure, if there is still an instruction to be transmitted on the transmission channel, the transmission channel can be identified as being occupied, and no new instruction can be sent to the transmission channel at this time. Conversely, if there is no instruction to be transmitted on the transmission channel, the transmission channel can be identified as being unoccupied or idle, and new instructions can be sent to the transmission channel at this time.

In a specific implementation, the IDU may monitor whether the two transmission channels are occupied and send the monitoring results back to the IFU.

Optionally, if the two transmission channels are unoccupied and the two transmission channels include a primary transmission channel and a secondary transmission channel, the instructions fetched earlier may be sent to the primary transmission channel and the instructions fetched later may be sent to the secondary transmission channel.

Optionally, if the two transmission channels are occupied, the IFU can be controlled to pause transmitting the new read instructions to the transmission channels until at least one of the transmission channels is unoccupied, and then the IFU is controlled to continue to send the new read instructions to the unoccupied transmission channel of the two transmission channels.

As a result, the method can control the IFU to read instructions according to the instruction fetch signal, and the new read instructions can be sent to the unoccupied transmission channel.

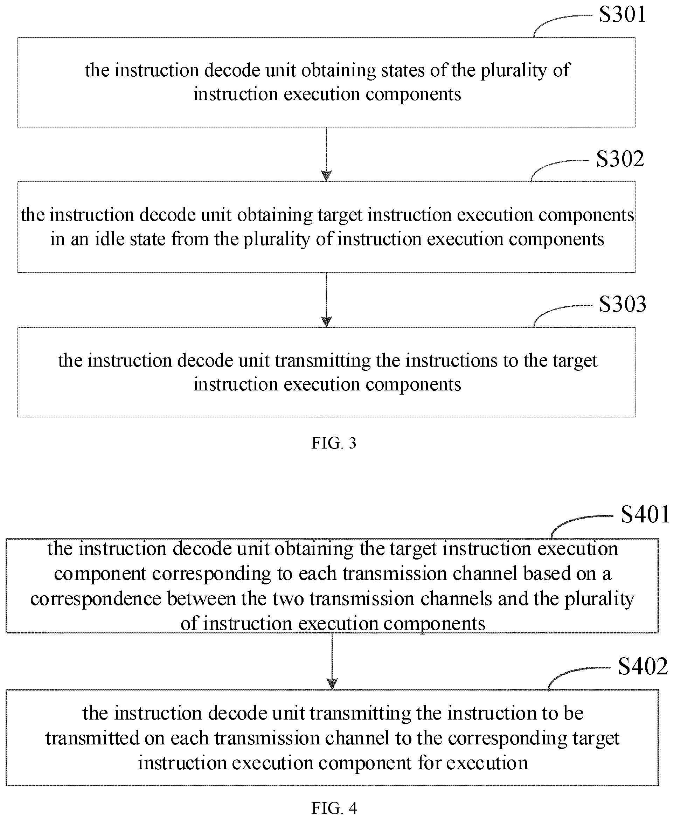

Based on any of the above embodiments, the execution unit at step S 103 may include a plurality of instruction execution components. As shown in FIG. 3, at step S 103, the IDU may control the two transmission channels to transmit the instructions to the execution unit based on the transmission control signal as follows.

At S301, the IDU obtains states of the plurality of instruction execution components.

In embodiments of the disclosure, the state of the instruction execution component includes, but is not limited to, an occupied state and an idle state. An instruction execution component is identified as being in the occupied state if the instruction execution component is executing a previously transmitted instruction. Conversely, an instruction execution component is identified as being in the idle state if the instruction execution component is not executing an instruction currently.

In specific implementations, the execution unit may monitor the states of the plurality of instruction execution components it includes and send the monitoring results back to the IDU.

At S302, the IDU obtains a target instruction execution component in the idle state from the plurality of instruction execution components.

In a specific implementation, the IDU may select candidate instruction execution components that match the type of the instruction from the plurality of instruction execution components based on the type of the instruction, and then select the target instruction execution component in the idle state from the candidate instruction execution components.

For example, if the instruction is an additive operation instruction and the execution unit includes three additive instruction execution components A, B and C, the additive instruction execution components A, B and C can firstly be used as the candidate instruction execution components matching the type of the instruction, and if the additive instruction execution components A and B are occupied and the additive instruction execution component C is idle, the additive instruction execution component C can be finally selected as the target instruction execution component.

At S303, the IDU transmits the instruction to the target instruction execution component.

As a result, the method is able to screen out the target instruction execution component that is in the idle state from the plurality of instruction execution components and transmit the instruction to the target instruction execution component.

Based on any of the above embodiments, as shown in FIG. 4, transmitting the instruction to the target instruction execution component at step S303 may include the followings.

At S401, the IDU obtains the target instruction execution component corresponding to each transmission channel based on a correspondence between the two transmission channels and the plurality of instruction execution components.

In embodiments of the disclosure, the correspondence between the two transmission channels and the plurality of instruction execution components may be pre-established and pre-set in the storage space of the IDU. Optionally, some instruction execution components correspond to only one of the two transmission channels, while some instruction execution components correspond to both transmission channels.

In an embodiment of the disclosure, if there is a correspondence between the transmission channel and a certain instruction execution component, it indicates that the transmission channel can transmit the instruction to the instruction execution component for execution. Conversely, if there is no correspondence between the transmission channel and a certain instruction execution component, it indicates that the transmission channel cannot transmit the instruction to the instruction execution component for execution.

In a specific implementation, the IDU may, based on the correspondence between each transmission channel and the plurality of instruction execution components, obtain the target instruction execution component having a correspondence with each transmission channel from the plurality of target instruction execution components that are in the idle state, as the target instruction execution component corresponding to each transmission channel.

At S402, the IDU transmits the instruction to be transmitted on each transmission channel to the corresponding target instruction execution component for execution.

For example, assuming that the instruction on transmission channel 1 is an additive operation instruction and the execution unit includes three additive instruction execution components A, B and C, if the additive instruction execution component A is in the occupied state and the additive instruction execution components B and C are in the idle state, then the additive instruction execution components B and C may firstly be determined to be the target instruction execution components. If the transmission channel 1 corresponds to the additive instruction execution component B and the transmission channel 1 does not correspond to the additive instruction execution component C, the additive instruction execution component C can be further determined to be the target instruction execution component corresponding to the transmission channel 1, and the instruction to be transmitted on the transmission channel 1 can be transmitted to the additive instruction execution component C for execution.

The method can thus take into account the correspondence between the transmission channels and the instruction execution components to determine the target instruction execution component of the instruction on the transmission channel.

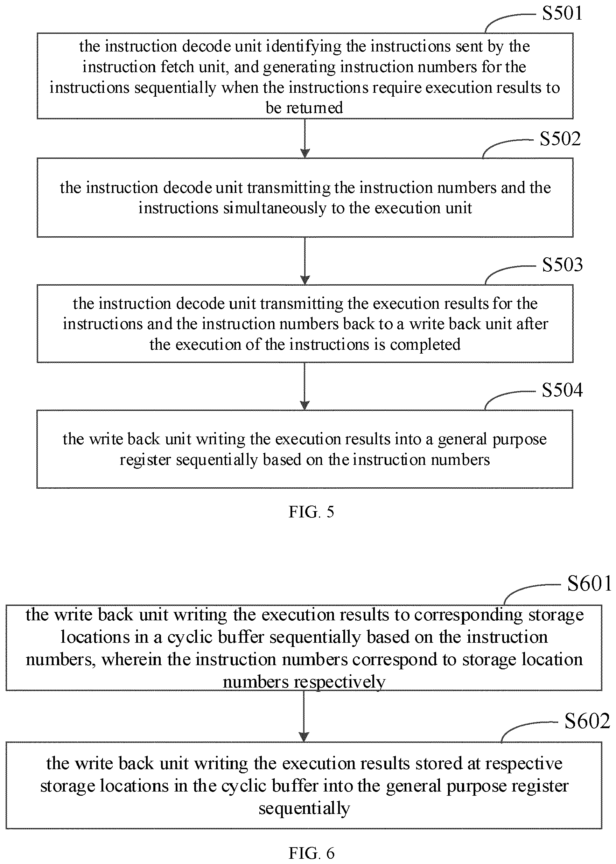

On the basis of any of the above embodiments, after execution of some instructions is completed, the execution results of the instructions may be written back. As shown in FIG. 5, the method includes followings.

At S501, the IDU identifies the instructions sent by the IFU, and generates instruction numbers for the instructions sequentially when the instructions require execution results to be returned.

In embodiments of the disclosure, some instructions require the execution results to be returned, and some instructions do not require the execution results to be returned. Optionally, labels may be preset for the instructions that require the execution results to be returned, so that the IDU can determine whether the instruction requires the execution result to be returned.

In a particular implementation, generating instruction numbers for the instructions sequentially may include generating the instruction numbers according to the sequence of the instruction fetch time. Optionally, the instructions may be numbered with reference to 0, 1, 2 to N, with N being a natural number.

For example, if the instruction numbers 0 to 20 currently exist and the maximum instruction number is allowed to be 49, and the IFU retrieves instructions A, B, C and D from the instruction storage space successively and in sequence, and the IDU identifies that instructions A and D require the execution results to be returned and instructions B and C do not require the execution results to be returned, then the instruction number 21 may be generated for the instruction A, and the instruction number 22 may be generated for the instruction D.

At S502, the IDU transmits the instruction numbers and the instructions simultaneously to the execution unit.

At S503, the execution unit transmits the execution results for the instructions and the instruction numbers back to a write back unit after the execution of the instructions is completed.

At S504, the write back unit writes the execution results into a general purpose register sequentially based on the instruction numbers.

In embodiments of the disclosure, the Write Back Unit (WBU) writes the execution results of the instructions back to the General Purpose Register (GPR).

In embodiments of the disclosure, the WBU writes the execution results to the GPR sequentially according to the instruction numbers, which indicates that the sequence of writing back the execution results is determined with reference to the instruction numbers, and the execution results of instructions with the instruction numbers ranked first are written back earlier than the execution results of instructions with the instruction numbers ranked later. That is, the method enables sequential writing back of instructions.

For example, suppose the instructions are numbered with reference to 0, 1, 2 to 50, and the instruction number of instruction A is 10, the execution of instruction A has currently been completed, and the execution result and instruction number of instruction A have been returned to the WBU. If the execution results of the instructions numbered 0 to 9 have all been written back, the execution result of instruction A can be written back, and if at least one of the execution results of the instructions numbered 0 to 9 has not been written back, the writing back of the execution result of instruction A can be paused until the execution results of the instructions numbered 0 to 9 have all been written back.

As a result, the method is able to number the instructions that require the execution results to be returned, and the execution results can be written back according to the instruction numbers, and thus sequential writing back of instructions can be achieved.

On the basis of the above embodiments, as illustrated in FIG. 6, the WBU may write the execution results to the GPR sequentially according to the instruction numbers at step S504 as follows.

At S601, the WBU writes the execution results to corresponding storage locations in a cyclic buffer sequentially based on the instruction numbers, in which the instruction numbers correspond to numbers of the storage locations respectively.

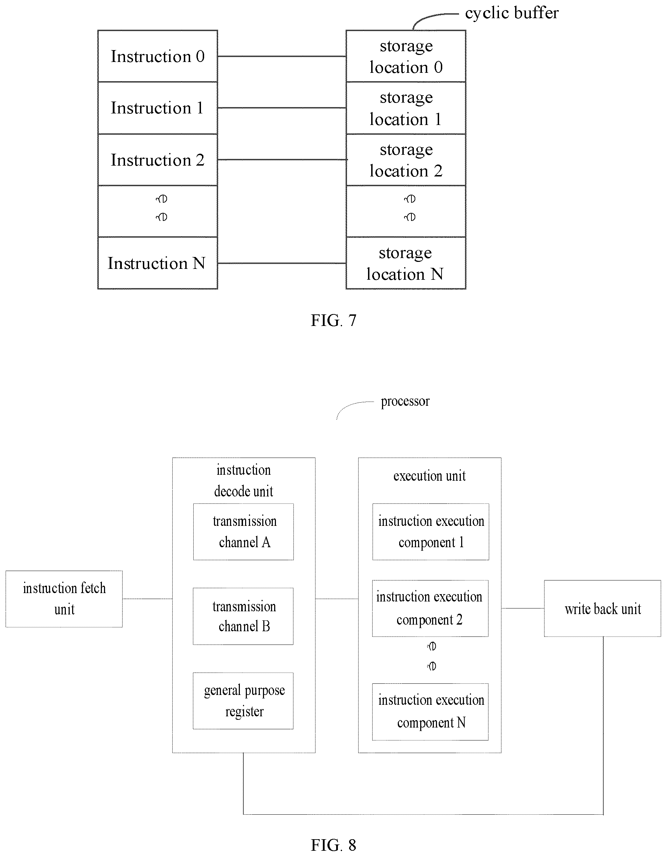

In embodiments of the disclosure, the WBU may include a cyclic buffer, the cyclic buffer may include a plurality of storage locations, and the numbers of storage locations may be generated sequentially according to the sequence of storage locations. For example, as illustrated in FIG. 7, the cyclic buffer has N storage locations and each storage location is numbered 0, 1, 2 to N in that order.

In embodiments of the disclosure, the instruction numbers correspond to the storage location numbers respectively. Thus, according to the instruction number corresponding to the execution result, the storage location with the number corresponding to the instruction number can be obtained, and the execution result can be written to the above storage location. For example, as illustrated in FIG. 7, if the instructions and storage locations are numbered with reference to 0, 1, 2 to N, the execution result corresponding to the instruction number m can be written to the storage location corresponding to the storage location number m. N is a natural number and m is a natural number less than or equal to N.

At S602, the WBU writes the execution results stored at respective storage locations in the cyclic buffer to the GPR sequentially.

In embodiments of the disclosure, the WBU writes the execution results stored at respective storage locations in the buffer to the GPR in order, which indicates that the sequence of writing back the execution results is with reference to the storage location numbers, and the execution result corresponding to the storage location number ranked first is written back earlier than the execution result corresponding to the storage location number ranked later. This method also enables sequential writing back of instructions as the storage location numbers correspond to the instruction numbers respectively.

The method thus enables sequential writing back of instructions by sequentially writing the execution results to the corresponding storage locations on the cyclic buffer according to the instruction numbers and then writing back the execution results according to the storage location numbers.

Based on the above embodiments, the cyclic buffer may include three fields vld, idx and data on each storage location.

The value of vld is used to indicate whether the storage location is valid or not. It should be noted that when the execution result is stored at the storage location, the storage location is valid and can be written back. Conversely, when no execution result is stored at the storage location, the storage location is invalid and cannot be written back. Optionally, the value of vld may be 0 or 1. When the value of vld is 0, it indicates that the storage location is invalid, and when the value of vld is 1, it indicates that the storage location is valid.

The value of idx is used to indicate a register in the GPR to which the execution result stored at the storage location is written.

The value of data is used to represent the execution result stored at the storage location.

Further, writing the execution result stored at each storage location in the cyclic buffer to the GPR in sequence at step S602 may include: querying the vld of that storage location each time starting from the read pointer; writing the data at that storage location back to the register indicated by idx in the GPR if the value of vld is 1; and assigning the value of vld at that storage location to 0, and updating the current pointer by pointing the pointer to the next storage location, to continue querying and writing back to the next storage location.

Optionally, if the value of vld of the storage location currently pointed by the pointer is 0, writing back may be paused until the vld value of the storage location is 1.

The method thus enables sequential writing back by means of sequential pointer querying.

Based on the above embodiments, generating the instruction numbers for the instructions sequentially at step S501 may further include: zeroing the instruction number when the number of instruction numbers reaches the number of storage locations of the cyclic buffer, and re-generating the instruction numbers in the order of the instruction fetch time.

For example, if the instruction numbers 0 to 19 already exist and the number of the storage locations in the cyclic buffer is 20, which indicates that the number of instruction numbers has reached the number of the storage locations in the cyclic buffer, the instruction number can be zeroed at this time. If the IFU then fetches instructions A, B, C and D from the instruction storage space successively and sequentially, and the IDU identifies that instructions A and D require the execution results to be returned and instructions B and C do not require the execution results to be returned, the instruction number 0 may be generated for the instruction A and instruction number 1 may be generated for the instruction D.

The method thus enables circular numbering of instructions and reduces the difficulty of maintaining instruction numbers.

As illustrated in FIG. 8, the processor includes an IFU, an IDU, an execution unit and a WBU. The IFU can read instructions from the instruction storage space (not shown in the figure) according to the instruction fetch signal sent by the IDU and send the read instructions to the IDU. The IDU includes two transmission channels, namely transmission channel A and transmission channel B, both of which can decode instructions, and number instructions that require the execution results to be returned to the execution unit, and send the instructions and the instruction numbers to the execution unit simultaneously. The execution unit can include a plurality of instruction execution components, namely instruction execution component 1, instruction execution component 2 to instruction execution component N. After the execution of the instructions is completed, the execution unit can return the execution results of the instructions and the instruction numbers back to the WBU, and the WBU can write the execution results into the GPR according to the instruction numbers in order.

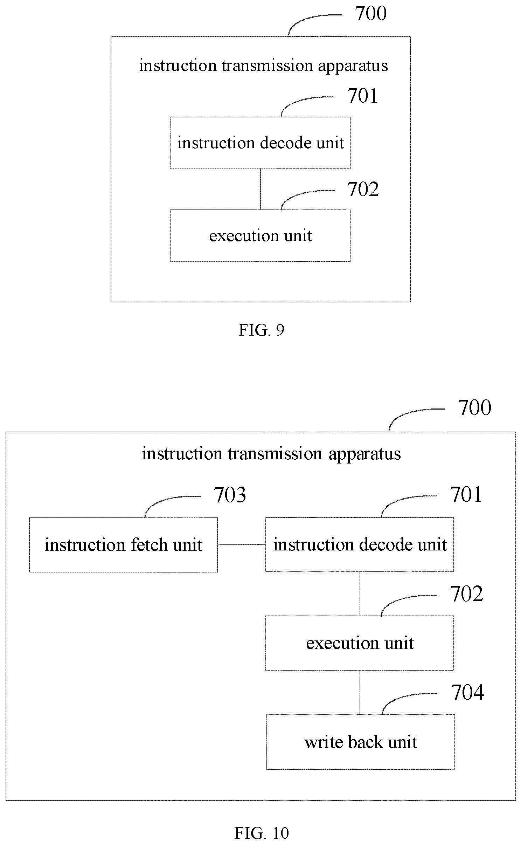

FIG. 9 is a block diagram of an instruction transmission apparatus according to the first embodiment of the disclosure.

As illustrated in FIG. 9, the instruction transmission apparatus 700 according to embodiments of the disclosure includes: an IDU 701 and an execution unit 702.

The IDU 701 is connected to the execution unit 702, and the IDU 701 includes two transmission channels.

The IDU 701 is configured to obtain transmission states of two transmission channels during a transmission cycle, generate a transmission control signal for the two transmission channels based on a combination of the transmission states of the two transmission channels, and control the two transmission channels to transmit instructions to an execution unit based on the transmission control signal.

The execution unit 702 is configured to execute the received instructions.

In an embodiment of the disclosure, the IDU 701 is further configured to: in response to determining that the combination of the transmission states of the two transmission channels represents that the two transmission channels are available for transmission, generate a first transmission control signal for instructing the two transmission channels to transmit; in response to determining that the combination of the transmission states of the two transmission channels represents that the two transmission channels are unavailable for transmission, generate a second transmission control signal for instructing the two transmission channels to pause transmitting; and in response to determining that the combination of the transmission states of the two transmission channels represents that one of the two transmission channels is available for transmission and the other transmission channel is unavailable for transmission, generate a third transmission control signal for instructing the available transmission channel to transmit and the other transmission channel to pause transmitting.

In an embodiment of the disclosure, the two transmission channels comprise a primary transmission channel and a secondary transmission channel, and a transmission priority of the primary transmission channel is greater than that of the secondary transmission channel.

In an embodiment of the disclosure, the primary transmission channel is available for transmission and the secondary transmission channel is unavailable for transmission, the IDU 701 is configured to generate a transfer indication signal for transferring an instruction to be transmitted in the secondary transmission channel to the primary transmission channel for transmission, and the IDU 701 is configured to transfer the instruction to be transmitted to the primary transmission channel based on the transfer indication signal.

In an embodiment of the disclosure, as illustrated in FIG. 10, the instruction transmission apparatus 700 further includes an IFU 703, and the IFU 703 is connected to the IDU 701. The IDU 701 is further configured to: generate an instruction fetch signal for the IFU based on the combination of the transmission states of the two transmission channels.

In an embodiment of the disclosure, the IDU 701 is further configured to: in response to determining that the combination of the transmission states represents that the transmission states of the two transmission channels are available for transmission, generate a first instruction fetch signal for instructing the IFU to read two new instructions; in response to determining that the combination of the transmission states represents that the transmission states of the two transmission channels are unavailable for transmission, generate a second instruction fetch signal for instructing the IFU to pause reading new instructions; and in response to determining that the combination of the transmission states of the two transmission channels represents that one of the two transmission channels is available for transmission and the other transmission channel is unavailable for transmission, generate a third instruction fetch signal for instructing the IFU to read one new instruction.

In an embodiment of the disclosure, the IDU 701 is further configured to: send the instruction fetch signal to the IFU after generating the instruction fetch signal. The IFU is configured to continue to read new instructions based on the instruction fetch signal after receiving the instruction fetch signal.

In an embodiment of the disclosure, the IFU 703 is further configured to: send the read new instructions to an unoccupied channel of the two transmission channels after continuing to read new instructions based on the instruction fetch signal.

In an embodiment of the disclosure, the execution unit 702 includes a plurality of instruction execution components, the IDU 701 is further configured to: obtain states of the plurality of instruction execution components; obtain target instruction execution components in an idle state from the plurality of instruction execution components; and transmit the instructions to the target instruction execution components.

In an embodiment of the disclosure, the IDU 701 is further configured to: obtain the target instruction execution component corresponding to each transmission channel based on a correspondence between the two transmission channels and the plurality of instruction execution components, and transmit the instruction to be transmitted on each transmission channel to the corresponding target instruction execution component for execution.

In an embodiment of the disclosure, as illustrated in FIG. 10, the instruction transmission apparatus 700 further includes a WBU 704, and the WBU 704 is connected to the execution unit 702 and a GPR (not shown), respectively. The IDU 701 is further configured to: identify the instructions sent by the IFU, and generate instruction numbers for the instructions sequentially when the instructions require execution results to be returned, and transmit the instruction numbers and the instructions simultaneously to the execution unit 702. The execution unit 702 is further configured to: transmit the execution results for the instructions and the instruction numbers back to a WBU 704 after the execution of the instructions is completed. The WBU 704 is configured to: write the execution results into the GPR sequentially based on the instruction numbers.

In an embodiment of the disclosure, the WBU 704 is further configured to: write the execution results to corresponding storage locations in a cyclic buffer sequentially based on the instruction numbers, in which the instruction numbers correspond to numbers of the storage locations respectively; and write the execution results stored at respective storage locations in the cyclic buffer into the GPR sequentially.

With the apparatus of the disclosure, it is possible to determine the transmission control signal for the two transmission channels based on the combination of the transmission states of the two transmission channels, and the two transmission channels are controlled to transmit instructions according to the transmission control signal. In this way, out-of-sequence transmission can be achieved with high execution efficiency. Compared with the related art in which the out-of-sequence transmission architecture uses a means of configuring a reservation station in hardware, this method has the advantages of the hardware structure being simple, the occupied area and power consumption of a processor being small, and the costs of development being low. Therefore, when processing a speech containing a lot of digital signals, which requires high real-time requirements, the instructions can be issued and executed as soon as possible.

According to embodiments of the disclosure, the disclosure also provides an electronic device, a readable storage medium and a computer program product.

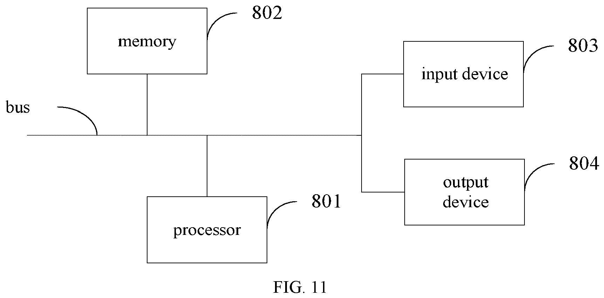

FIG. 11 is a block diagram of an electronic device used to implement the instruction transmission method according to the embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 11, the electronic device includes: one or more processors 801, a memory 802, and interfaces for connecting various components, including a high-speed interface and a low-speed interface. The various components are interconnected using different buses and can be mounted on a common mainboard or otherwise installed as required. The processor 801 may process instructions executed within the electronic device, including instructions stored in or on the memory to display graphical information of the GUI on an external input/output device such as a display device coupled to the interface. In other embodiments, a plurality of processors and/or buses can be used with a plurality of memories and processors, if desired. Similarly, a plurality of electronic devices can be connected, each providing some of the necessary operations (for example, as a server array, a group of blade servers, or a multiprocessor system). A processor 801 is taken as an example in FIG. 11.

The memory 802 is a non-transitory computer-readable storage medium according to the disclosure. The memory stores instructions executable by at least one processor, so that the at least one processor executes the method according to the disclosure. The non-transitory computer-readable storage medium of the disclosure stores computer instructions, which are used to cause a computer to execute the method according to the disclosure.

As a non-transitory computer-readable storage medium, the memory 802 is configured to store non-transitory software programs, non-transitory computer-executable programs and modules, such as program instructions/modules (e.g., the IDU and the execution unit shown in the FIG. 9) corresponding to the method according to the embodiments of the disclosure. The processor 801 executes various functional applications and data processing of the server by running the non-transitory software programs, instructions, and modules stored in the memory 802, to implement the method in the above method embodiments.

The memory 802 may include a storage program area and a storage data area, where the storage program area may store an operating system and application programs required for at least one function. The storage data area may store data created according to the use of the electronic device for implementing the method. In addition, the memory 802 may include a high-speed random access memory, and a non-transitory memory, such as at least one magnetic disk storage device, a flash memory device, or other non-transitory solid-state storage device. In some embodiments, the memory 802 may optionally include a memory remotely disposed with respect to the processor 801, and these remote memories may be connected to the electronic device for implementing the method through a network. Examples of the above network include, but are not limited to, the Internet, an intranet, a local area network, a mobile communication network, and combinations thereof.

The electronic device for implementing the instruction transmission method may further include: an input device 803 and an output device 804. The processor 801, the memory 802, the input device 803 and the output device 804 may be connected by a bus or in other ways, and the connection by a bus is taken as an example in FIG. 11.

The input device 803 may receive inputted numeric or character information, and generate key signal inputs related to user settings and function control of an electronic device for implementing the method, such as a touch screen, a keypad, a mouse, a trackpad, a touchpad, an indication rod, one or more mouse buttons, trackballs, joysticks and other input devices. The output device 804 may include a display device, an auxiliary lighting device (for example, an LED), a haptic feedback device (for example, a vibration motor), and the like. The display device may include, but is not limited to, a Liquid Crystal Display (LCD), a Light Emitting Diode (LED) display, and a plasma display. In some embodiments, the display device may be a touch screen.

Various embodiments of the systems and technologies described herein may be implemented in digital electronic circuit systems, integrated circuit systems, Application Specific Integrated Circuits (ASICs), computer hardware, firmware, software, and/or combinations thereof. These various embodiments may be implemented in one or more computer programs, which may be executed and/or interpreted on a programmable system including at least one programmable processor. The programmable processor may be dedicated or general purpose programmable processor that receives data and instructions from a storage system, at least one input device, and at least one output device, and transmits the data and instructions to the storage system, the at least one input device, and the at least one output device.

These computing programs (also known as programs, software, software applications, or code) include machine instructions of a programmable processor and may utilize highlevel processes and/or object-oriented programming languages, and/or assembly/machine languages to implement these calculation procedures. As used herein, the terms "machine-readable medium" and "computer-readable medium" refer to any computer program product, device, and/or device used to provide machine instructions and/or data to a programmable processor (for example, magnetic disks, optical disks, memories, Programmable Logic Devices (PLDs), including machine-readable media that receive machine instructions as machine-readable signals. The term "machine-readable signal" refers to any signal used to provide machine instructions and/or data to a programmable processor.

In order to provide interaction with a user, the systems and techniques described herein may be implemented on a computer having a display device (e.g., a Cathode Ray Tube (CRT) or a LCD monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or a computing system that includes any combination of such background components, intermediate computing components, or front-end components. The components of the system may be interconnected by any form or medium of digital data communication (e.g., a communication network). Examples of communication networks include: a local area network (LAN), a wide area network (WAN), and the Internet.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in the cloud computing service system, to solve the defects of difficult management and weak business scalability in the traditional physical host and Virtual Private Server (VPS) service. The server can also be a server of distributed system or a server combined with block-chain.

The disclosure provides a computer program product including computer programs. When the computer programs are executed by the processor, the method according to the above embodiments is implemented.

According to the technical solution of the disclosure, it is possible to determine the transmission control signal for the two transmission channels based on the combination of the transmission states of the two transmission channels, and the two transmission channels are controlled to transmit instructions according to the transmission control signal, in this way, out-of-sequence transmission can be achieved with high execution efficiency. Compared with the related art in which the out-of-sequence transmission architecture using a means of configuring a reservation station in hardware, this method has the advantages of the hardware structure being simple, the occupied area and power consumption of a processor being small, and the costs of development being low.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors. Any modification, equivalent replacement and improvement made within the spirit and principle of the disclosure shall be included in the protection scope of the disclosure.

## Claims

1. An instruction transmission method, comprising:
obtaining by an instruction decode unit, transmission states of two transmission channels in a transmission cycle;
generating by the instruction decode unit, a transmission control signal for the two transmission channels based on a combination of the transmission states of the two transmission channels; and
controlling by the instruction decode unit, the two transmission channels to transmit instructions to an execution unit based on the transmission control signal.

2. The method of claim 1, wherein generating by the instruction decode unit, the transmission control signal for the two transmission channels based on the combination of the transmission states of the two transmission channels, comprises:
in response to determining that the combination of the transmission states of the two transmission channels represents that the two transmission channels are available for transmission, generating by the instruction decode unit a first transmission control signal for instructing the two transmission channels to transmit;
in response to determining that the combination of the transmission states of the two transmission channels represents that the two transmission channels are unavailable for transmission, generating by the instruction decode unit a second transmission control signal for instructing the two transmission channels to pause transmitting; and
in response to determining that the combination of the transmission states of the two transmission channels represents that one of the two transmission channels is available for transmission and the other transmission channel is unavailable for transmission, generating by the instruction decode unit a third transmission control signal for instructing the one transmission channel to transmit and the other transmission channel to pause transmitting.

3. The method of claim 2, wherein the two transmission channels comprise a primary transmission channel and a secondary transmission channel, and a transmission priority of the primary transmission channel is greater than a transmission priority of the secondary transmission channel.

4. The method of claim 3, wherein the primary transmission channel is available for transmission and the secondary transmission channel is unavailable for transmission, the instruction decode unit is configured to generate a transfer indication signal for transferring an instruction to be transmitted in the secondary transmission channel to the primary transmission channel for transmission; and
the instruction decode unit is configured to transfer the instruction to be transmitted to the primary transmission channel based on the transfer indication signal.

5. The method of claim 1, further comprising:
generating by the instruction decode unit, an instruction fetch signal for an instruction fetch unit based on the combination of the transmission states of the two transmission channels.

6. The method of claim 5, wherein generating by the instruction decode unit, the instruction fetch signal for the instruction fetch unit based on the combination of the transmission states of the two transmission channels, comprises:
in response to determining that the combination of the transmission states represents that the transmission states of the two transmission channels are available for transmission, generating by the instruction decode unit, a first instruction fetch signal for instructing the instruction fetch unit to read two new instructions;
in response to determining that the combination of the transmission states represents that the transmission states of the two transmission channels are unavailable for transmission, generating by the instruction decode unit, a second instruction fetch signal for instructing the instruction fetch unit to pause reading new instructions; and
in response to determining that the combination of the transmission states of the two transmission channels represents that one of the two transmission channels is available for transmission and the other transmission channel is unavailable for transmission, generating by the instruction decode unit, a third instruction fetch signal for instructing the instruction fetch unit to read one new instruction.

7. The method of claim 5, wherein after generating by the instruction decode unit, the instruction fetch signal for the instruction fetch unit based on the combination of the transmission states of the two transmission channels, the method further comprises:
sending by the instruction decode unit the instruction fetch signal to the instruction fetch unit; and
continuing to read new instructions by the instruction fetch unit based on the instruction fetch signal.

8. The method of claim 7, wherein after continuing to read new instructions by the instruction fetch unit based on the instruction fetch signal, the method further comprises:
sending by the instruction fetch unit, the read new instructions to an unoccupied transmission channel of the two transmission channels.

9. The method of any one of claims 1-8, wherein the execution unit comprises a plurality of instruction execution components, controlling by the instruction decode unit, the two transmission channels to transmit the instructions to the execution unit based on the transmission control signal, comprises:
obtaining by the instruction decode unit, states of the plurality of instruction execution components;
obtaining by the instruction decode unit, target instruction execution components in an idle state from the plurality of instruction execution components; and
transmitting by the instruction decode unit, the instructions to the target instruction execution components.

10. The method of claim 9, wherein transmitting the instructions to the target instruction execution components comprises:
obtaining by the instruction decode unit, the target instruction execution component corresponding to each transmission channel based on a correspondence between the two transmission channels and the plurality of instruction execution components; and
transmitting by the instruction decode unit, the instruction to be transmitted on each transmission channel to the corresponding target instruction execution component for execution.

11. The method of any one of claims 1-8, further comprising:
identifying by the instruction decode unit, the instructions sent by the instruction fetch unit, and generating instruction numbers for the instructions sequentially when the instructions require execution results to be returned;
transmitting by the instruction decode unit, the instruction numbers and the instructions simultaneously to the execution unit;
transmitting by the execution unit, the execution results for the instructions and the instruction numbers back to a write back unit after execution of the instructions is completed; and
writing by the write back unit, the execution results into a general purpose register sequentially based on the instruction numbers.

12. The method of claim 11, wherein writing by the write back unit, the execution results into the general purpose register sequentially based on the instruction numbers, comprises:
writing by the write back unit, the execution results to corresponding storage locations in a cyclic buffer sequentially based on the instruction numbers, wherein the instruction numbers correspond to numbers of the storage locations respectively; and
writing by the write back unit, the execution results stored at respective storage locations into the cyclic buffer into the general purpose register sequentially.

13. An instruction transmission apparatus, comprising an instruction decode unit and an execution unit, wherein the instruction decode unit is connected to the execution unit, and the instruction decode unit comprises two transmission channels;
the instruction decode unit is configured to obtain transmission states of two transmission channels in a transmission cycle, generate a transmission control signal for the two transmission channels based on a combination of the transmission states of the two transmission channels, and control the two transmission channels to transmit instructions to an execution unit based on the transmission control signal; and
the execution unit is configured to execute the received instructions.

14. The apparatus of claim 13, wherein the instruction decode unit is further configured to:
in response to determining that the combination of the transmission states of the two transmission channels represents that the two transmission channels are available for transmission, generate a first transmission control signal for instructing the two transmission channels to transmit;
in response to determining that the combination of the transmission states of the two transmission channels represents that the two transmission channels are unavailable for transmission, generate a second transmission control signal for instructing the two transmission channels to pause transmitting; and
in response to determining that the combination of the transmission states of the two transmission channels represents that one of the two transmission channels is available for transmission and the other transmission channel is unavailable for transmission, generate a third transmission control signal for instructing the one transmission channel to transmit and the other transmission channel to pause transmitting.

15. The apparatus of claim 14, wherein the two transmission channels comprise a primary transmission channel and a secondary transmission channel, and a transmission priority of the primary transmission channel is greater than a transmission priority of the secondary transmission channel.

16. The apparatus of claim 15, wherein the primary transmission channel is available for transmission and the secondary transmission channel is unavailable for transmission, the instruction decode unit is configured to generate a transfer indication signal for transferring an instruction to be transmitted in the secondary transmission channel to the primary transmission channel for transmission; and
the instruction decode unit is configured to transfer the instruction to be transmitted to the primary transmission channel based on the transfer indication signal.

17. The apparatus of claim 13, wherein the apparatus further comprises: an instruction fetch unit, and the instruction fetch unit is connected to the instruction decode unit; and
the instruction decode unit is further configured to:
generate an instruction fetch signal for the instruction fetch unit based on the combination of the transmission states of the two transmission channels.

18. The apparatus of claim 17, wherein the instruction decode unit is further configured to:
in response to determining that the combination of the transmission states represents that the transmission states of the two transmission channels are available for transmission, generate a first instruction fetch signal for instructing the instruction fetch unit to read two new instructions;
in response to determining that the combination of the transmission states represents that the transmission states of the two transmission channels are unavailable for transmission, generate a second instruction fetch signal for instructing the instruction fetch unit to pause reading new instructions; and
in response to determining that the combination of the transmission states of the two transmission channels represents that one of the two transmission channels is available for transmission and the other transmission channel is unavailable for transmission, generate a third instruction fetch signal for instructing the instruction fetch unit to read one new instruction.

19. The apparatus of claim 17, wherein the instruction decode unit is further configured to:
send the instruction fetch signal to the instruction fetch unit after generating the instruction fetch signal; and
the instruction fetch unit is configured to continue to read new instructions based on the instruction fetch signal after receiving the instruction fetch signal.

20. The apparatus of claim 19, wherein the instruction fetch unit is further configured to:
send the new read instructions to an unoccupied transmission channel of the two transmission channels after reading new instructions based on the instruction fetch signal.

21. The apparatus of any one of claims 13-20, wherein the execution unit comprises a plurality of instruction execution components,
the instruction decode unit is further configured to:
obtain states of the plurality of instruction execution components;
obtain target instruction execution components in an idle state from the plurality of instruction execution components; and
transmit the instructions to the target instruction execution components.

22. The apparatus of claim 21, wherein the instruction decode unit is further configured to:
obtain the target instruction execution component corresponding to each transmission channel based on a correspondence between the two transmission channels and the plurality of instruction execution components; and
transmit the instruction to be transmitted on each transmission channel to the corresponding target instruction execution component for execution.

23. The apparatus of any one of claims 13-20, wherein the apparatus comprises a write back unit, and the write back unit is connected to the execution unit and a general purpose register, respectively;
the instruction decode unit is further configured to:
identify the instructions sent by the instruction fetch unit, and generate instruction numbers for the instructions sequentially when the instructions require execution results to be returned;
transmit the instruction numbers and the instructions simultaneously to the execution unit;
the execution unit is further configured to:
transmit the execution results for the instructions and the instruction numbers back to a write back unit after execution of the instructions is completed; and
the write back unit is configured to: write the execution results into the general purpose register sequentially based on the instruction numbers.

24. The apparatus of claim 23, wherein the write back unit is further configured to:
write the execution results to corresponding storage locations in a cyclic buffer sequentially based on the instruction numbers, wherein the instruction numbers correspond to numbers of the storage locations respectively; and
write the execution results stored at respective storage locations in the cyclic buffer into the general purpose register sequentially.

25. An electronic device, comprising:
at least one processor; and
a memory communicatively coupled to the at least one processor; wherein,
the memory stores instructions executable by the at least one processor, when the instructions are executed by the at least one processor, the at least one processor is enabled to implement the instruction transmission method according to any one of claims 1-12.

26. A non-transitory computer-readable storage medium having computer instructions stored thereon, wherein the computer instructions are configured to enable a computer to implement the instruction transmission method according to any one of claims 1-12.

27. A computer program product comprising computer programs, wherein when the computer programs are executed by a processor, the instruction transmission method according to any one of claims 1-12 is implemented.
